# EUROPEAN PATENT SPECIFICATION

(11) **EP 4 027 337 B1**
(45) Date of publication and mention of the grant of the patent: **14.02.2024**
(21) Application number: 22167518.4
(22) Date of filing: 11.04.2022
(51) Int. Cl.: G10L 15/26, G06F 40/129, G06F 40/53, G06F 40/232

(54) **SPEECH RECOGNITION METHOD AND APPARATUS, ELECTRONIC DEVICE AND STORAGE MEDIUM**
SPRACHERKENNUNGSVERFAHREN UND -GERÄT, ELEKTRONISCHE VORRICHTUNG UND SPEICHERMEDIUM
PROCÉDÉ ET APPAREIL DE RECONNAISSANCE DE LA PAROLE, DISPOSITIF ÉLECTRONIQUE ET SUPPORT D'ENREGISTREMENT

(30) Priority: 12.04.2021 CN 202110391076
(43) Date of publication of application: 13.07.2022
(73) Proprietor: Apollo Intelligent Connectivity (Beijing) Technology Co., Ltd., Beijing 100176 (CN)
(72) Inventor: LIU, Rong, Beijing, 100176 (CN)
(74) Representative: Maiwald GmbH

(56) References cited:
- WO-A1-2020/186778
- CN-A- 111 444 705
- LAURENT ANTOINE ET AL: "Improving recognition of proper nouns in ASR through generating and filtering phonetic transcriptions", COMPUTER SPEECH AND LANGUAGE, ELSEVIER, LONDON, GB, vol. 28, no. 4, 21 March 2014 (2014-03-21) , pages 979-996, XP028648565, ISSN: 0885-2308, DOI: 10.1016/J.CSL.2014.02.006

## Description

### TECHNICAL FIELD

The present disclosure relates to the field of computer technology, specially the field of artificial intelligence technologies such as speech recognition and natural language processing, and in particular to a speech recognition method, a speech recognition apparatus, an electronic device and a storage medium.

### BACKGROUND

Currently, voice interaction is a commonly used interaction method in human-computer interaction. For example, in a vehicle, natural language understanding technology can be used to recognize the user's voice command, and then realize operations such as tilting the sunroof and turning on the air conditioner of the vehicle, so as to provide more convenient, accurate and humanized driving services, to improve the driving experience.

For voice interaction, offline voice recognition is an indispensable function. Offline voice recognition not only requires products to be able to convert voice into text through local recognition, but also requires the ability to correctly understand the user's intention to give corresponding feedback. Therefore, it is particularly important to improve the accuracy of offline speech recognition results. WO 2020/186778 discloses using a generic word database for correcting Pinyin recognized sentences.

### SUMMARY

The present disclosure provides a speech recognition method, a speech recognition apparatus, an electronic device, a storage medium, and a computer program product according to the independent claims.

According to a first aspect, a speech recognition method according to claim 1 is provided.

In some embodiments, determining the at least one sentence pinyin string corresponding to the initial recognition result based on the at least one candidate character pinyin string corresponding to each character includes: for each character, selecting a candidate character pinyin string from the at least one candidate character pinyin string corresponding to the character as a target character pinyin string; splicing target character pinyin strings of selected characters based on a sequence of characters in the initial recognition result; and determining a spliced pinyin string as the sentence pinyin string corresponding to the initial recognition result.

In some embodiments, there are a plurality of sentence pinyin strings, and generating the pinyin-corrected recognition result by performing pinyin correction on the initial recognition result based on the at least one sentence pinyin string, the method also includes: matching each of the plurality of sentence pinyin strings with a plurality of pinyin strings to be corrected in a pinyin correction database, in which the pinyin correction database includes the plurality of pinyin strings to be corrected, a corrected pinyin string corresponding to each pinyin string to be corrected, and a recognition result corresponding to the corrected pinyin string; determining, in response to that there is a pinyin string to be corrected that matches the sentence pinyin string in the pinyin correction database, the corrected pinyin string corresponding to the pinyin string to be corrected that matches the sentence pinyin string as a target corrected pinyin string; and determining a recognition result corresponding to the target corrected pinyin string as the pinyin-corrected recognition result.

According to a second aspect, a speech recognition apparatus according to claim 4 is provided.

In some embodiments, the first determining module includes: a selecting unit, configured to, for each character, select a candidate character pinyin string from the at least one candidate character pinyin string corresponding to the character as a target character pinyin string; a splicing unit, configured to splice target character pinyin strings of selected characters based on a sequence of characters in the initial recognition result; and a first determining unit, configured to determine a spliced pinyin string as the sentence pinyin string corresponding to the initial recognition result.

In some embodiments, there are a plurality of sentence pinyin strings, and the generating module includes: a matching unit, configured to match each of the plurality of sentence pinyin strings with a plurality of pinyin strings to be corrected in a pinyin correction database, in which the pinyin correction database includes the plurality of pinyin strings to be corrected, a corrected pinyin string corresponding to each pinyin string to be corrected, and a recognition result corresponding to the corrected pinyin string; a second determining unit, configured to determine, in response to that there is a pinyin string to be corrected that matches the sentence pinyin string in the pinyin correction database, the corrected pinyin string corresponding to the pinyin string to be corrected that matches the sentence pinyin string as a target corrected pinyin string; and a third determining unit, configured to determine a recognition result corresponding to the target corrected pinyin string as the pinyin-corrected recognition result.

According to a third aspect, an electronic device according to claim 7 is provided. The electronic device includes: at least one processor and a memory communicatively coupled to the at least one processor. The memory stores instructions executable by the at least one processor, and when the instructions are executed by the at least one processor, the at least one processor is enabled to implement the speech recognition method as described above.

According to a fourth aspect, a non-transitory computer-readable storage medium according to claim 8 is provided. The computer instructions are configured to cause the computer to implement the speech recognition method as described above.

According to a fifth aspect, a computer program product according to claim 9 is provided. When the computer program is executed by a processor, the speech recognition method described above is implemented.

It should be understood that the content described in this section is not intended to identify the key or important features of the embodiments of the present disclosure, nor is it intended to limit the scope of the present disclosure. Additional features of the present disclosure will be easily understood through the following description.

### BRIEF DESCRIPTION OF THE DRAWINGS

The drawings are used to better understand the solution and do not constitute a limitation of the present disclosure, in which:
FIG. 1 is a flowchart of a speech recognition method according to Embodiment 1 of the present disclosure.
FIG. 2 is a flowchart of a speech recognition method according to Embodiment 2 of the present disclosure.
FIG. 3 is a flowchart of a speech recognition method according to Embodiment 3 of the present disclosure.
FIG. 4 is a flowchart of a speech recognition method according to Embodiment 4 of the present disclosure.
FIG. 5 is a schematic diagram of a speech recognition apparatus according to Embodiment 5 of the present disclosure.
FIG. 6 is a schematic diagram of a speech recognition apparatus according to Embodiment 6 of the present disclosure.
FIG. 7 is a block diagram of an electronic device used to implement the speech recognition method according to an embodiment of the present disclosure.

### DETAILED DESCRIPTION

The exemplary embodiments of the present disclosure are described below in combination with the accompanying drawings, which include various details of the embodiments of the present disclosure to aid in understanding, and should be considered merely exemplary. Therefore, those skilled in the art should know that various changes and modifications can be made to the embodiments described herein without departing from the scope and spirit of the present disclosure. For the sake of clarity and brevity, descriptions of well-known features and structures have been omitted from the following description.

It is understandable that offline speech recognition is an essential function for voice interaction. Offline speech recognition not only requires the product to be able to convert speech into text through local recognition, but also requires the ability to correctly understand the user's intention to make corresponding response. Therefore, it is particularly important to improve the accuracy of offline speech recognition results.

In order to improve the accuracy of the speech recognition result, the present disclosure provides a speech recognition method. According to the speech recognition method, firstly the initial recognition result is obtained by performing the speech recognition on the sentence to be recognized. The at least one candidate character pinyin string corresponding to each character in the initial recognition result is obtained. The at least one sentence pinyin string corresponding to the initial recognition result is determined based on the at least one candidate character pinyin string corresponding to the character. Further, the pinyin-corrected recognition result is generated by performing pinyin correction on the initial recognition result based on the at least one sentence pinyin string. Therefore, the accuracy of the speech recognition result is improved.

The speech recognition method, the speech recognition apparatus, an electronic device, a non-transitory computer-readable storage medium and a computer program product of the embodiments of the present disclosure are described below with reference to the accompanying drawings.

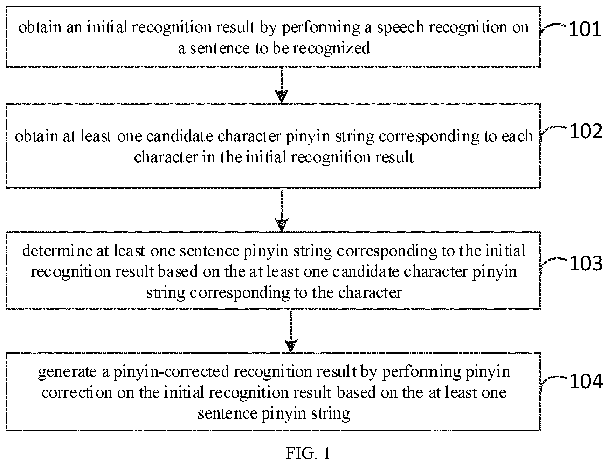

Firstly, the speech recognition method according to the present disclosure will be described in detail with reference to FIG. 1.

FIG. 1 is a flowchart of a speech recognition method according to Embodiment 1 of the present disclosure. It should be noted that in the speech recognition method of the embodiments, the execution subject is a speech recognition apparatus. The speech recognition apparatus can be an electronic device, and can also be configured in the electronic device, to improve the accuracy of the speech recognition result. The embodiments of the present disclosure are described by taking the speech recognition apparatus configured in the electronic device as an example.

The electronic device may be any stationary or mobile computing device capable of data processing, such as mobile computing device such as notebook computers, smart phones, and wearable devices, or stationary computing device such as desktop computers, or servers, or other types of computing devices, which are not limited in this disclosure.

As shown in FIG. 1, the speech recognition method includes the following steps.

In step 101, an initial recognition result is obtained by performing a speech recognition on a sentence to be recognized.

The initial recognition result is obtained by performing off-line speech recognition on the sentence to be recognized using the speech recognition apparatus, or obtained by performing online speech recognition on the sentence to be recognized using the speech recognition apparatus, which is not limited in the present disclosure.

Correspondingly, the speech recognition method of the present disclosure can be applied to improve the accuracy of the offline speech recognition result, and can also be applied to improve the accuracy of the online speech recognition result. The application scenarios of the speech recognition method are not limited in the present disclosure.

In step 102, at least one candidate character pinyin string corresponding to each character in the initial recognition result is obtained.

A character pinyin string consists of each letter in the corresponding pinyin of a character. For example, a pinyin string corresponding to " 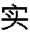 (Chinese character)" is "shi", and a pinyin string corresponding to " 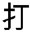 (Chinese character)" is "da".

In an exemplary embodiment, the speech recognition apparatus can carry out pinyin conversion character-by- character on the initial recognition result, to convert each character into pinyin in the initial recognition result. It should be noted that in the process of carrying out the pinyin conversion, for each character in the initial recognition result, it is necessary to consider the situation that the character is a polyphonic character and the pronunciation defects such as ambiguous pronunciation of "l" and "r", ambiguous pronunciation of "h" and "f", and ambiguous pronunciation of front and rear nasal sounds, which may lead to the situation in which one character corresponds to multiple pinyin strings, thereby obtaining at least one candidate character pinyin string corresponding to each character in the initial recognition result.

For example, it is assumed that in a vehicle, the initial recognition result of the sentence to be recognized obtained by the speech recognition apparatus is " 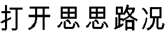 " (a Chinese sentence). The speech recognition apparatus can perform the pinyin conversion for each character in the initial recognition result, since the Chinese characters of " 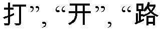 " and " 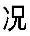 " are not polyphonic characters and generally do not have the situation of pronunciation errors, so that a candidate character pinyin string "da" corresponding to " 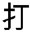 ", a candidate character pinyin string "kai" corresponding to " 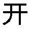 " and a candidate character pinyin string "lu" corresponding to " 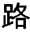 " and a candidate character pinyin string "kuang" corresponding to " 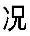 " are obtained. As for the two characters of " 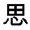 ", since there may be cases where the pronunciation of "sh" and "s" are ambiguous, thereby, two candidate character pinyin strings "sh" and "s" corresponding to each character of " 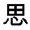 " can be obtained.

Alternatively, it is assumed that the initial recognition result of the sentence to be recognized obtained by the speech recognition apparatus is " 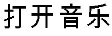 (Chinese sentence, which means turning on the music". The speech recognition apparatus can perform the pinyin conversion on each character in the initial recognition result. Since the Chinese characters " 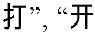 " and " 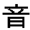 " are not polyphonic characters and usually do not have pronunciation errors, thus a candidate character pinyin string "da" corresponding to " 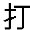 ", a candidate character pinyin string "kai" corresponding to " 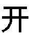 ", a candidate character pinyin string "yin" corresponding to "H". Since the character of " 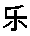 " is a polyphonic character, including the pronunciations "le" and "yue", two candidate character pinyin strings "le" and "yue" corresponding to " 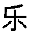 " can be obtained.

In step 103, at least one sentence pinyin string corresponding to the initial recognition result is determined based on the at least one candidate character pinyin string corresponding to the character.

The sentence pinyin string is a pinyin string corresponding to the whole sentence of the initial recognition result. For example, " 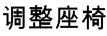 (a Chinese sentence, which means adjusting the seat)" corresponds to a sentence pinyin string "tiaozhengzuoyi".

In an exemplary embodiment, after the at least one candidate character pinyin string corresponding to each character in the initial recognition result is determined, at least one sentence pinyin string corresponding to the initial recognition result is obtained based on the at least one candidate character pinyin string corresponding to the character. When each character in the initial recognition result corresponds to a pinyin string of a candidate character, a sentence pinyin string corresponding to the initial recognition result is determined. When there is at least one character in the initial recognition result corresponding to multiple sentence pinyin strings, multiple sentence pinyin strings corresponding to the initial recognition result can be determined.

For example, based on the above-mentioned example, at least one candidate character pinyin string corresponding to each character in the initial recognition result of " 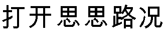 " is obtained, four sentence pinyin strings, i.e., "dakaisisilukuang", "dakaishishilukuang", "dakaishisilukuang" and "dakaisishilukuang" corresponding to the initial recognition result " 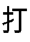 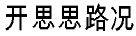 " are obtained, based on the candidate character pinyin string "da" corresponding to " 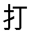 ", the candidate character pinyin string "kai" corresponding to " 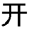 ", two candidate character pinyin strings of "shi" and "si" corresponding to each " 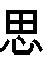 " respectively, a candidate character pinyin string "lu" corresponding to " 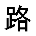 " and a candidate character pinyin string "kuang" corresponding to " 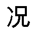 ". Similarly, two pinyin strings "dakaiyinyue" and "dakaiyinle" corresponding to the initial recognition result " 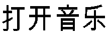 " can be obtained.

In step 104, a pinyin-corrected recognition result is generated by performing pinyin correction on the initial recognition result based on the at least one sentence pinyin string.

In an exemplary embodiment, a pinyin correction database can be set in advance, which includes a plurality of pinyin strings and recognition result corresponding to each pinyin string, so that after the at least one sentence pinyin string corresponding to the initial recognition result is determined, the at least one sentence pinyin string can be matched with each pinyin string in the preset pinyin correction database, so that the identification result corresponding to the pinyin string matched with the at least one sentence pinyin string corresponding to the initial recognition result in the pinyin correction database is determined as the pinyin-corrected identification result, to realize the pinyin correction of the initial identification result.

For example, it is assumed that a plurality of pinyin strings and the corresponding identification result of each pinyin string are included in the preset pinyin correction database, such as the pinyin string of "dakaishishilukuang" and the identification result " 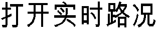 (Chinese sentence, which means turning on the real-time traffic monitor)" corresponding to the pinyin string of "dakaishishilukuang", and the four sentence pinyin strings corresponding to the obtained initial recognition result of " 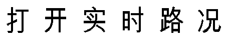 ", i.e., "dakaisisilukuang", "dakaishisilukuang", "dakaisishilukuang" and "dakaishishilukuang", then four sentence pinyin strings corresponding to the initial recognition result can be matched with a plurality of pinyin strings in the preset pinyin correction database respectively. Since "dakaishishilukuang" corresponding to the initial recognition result matches "dakaishishilukuang" in the pinyin correction database, the recognition result of " 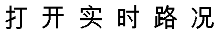 " corresponding to "dakaishishilukuang" can be determined as the pinyin-corrected recognition result, so that the initial recognition result of " 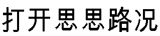 " is corrected to " 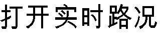 ".

According to the speech recognition method, after obtaining the initial recognition result of the sentence to be recognized, pinyin correction is performed on the initial recognition result, and when taking account of polyphonic characters and pronunciation defects when performing the pinyin correction, the at least one candidate character pinyin string corresponding to each character in the initial recognition result is obtained. The at least one sentence pinyin string corresponding to the initial recognition result is determined. To perform the pinyin correction on the initial recognition result based on the at least one sentence pinyin string, accurate speech recognition is performed on the statement to be recognized that has ambiguous pronunciation due to reasons such as polyphonic characters and pronunciation defects, to improve the accuracy of the speech recognition result.

According to the speech recognition method according to the embodiments of the present disclosure, at first, the initial recognition result is obtained by performing the speech recognition on the sentence to be recognized. The at least one candidate character pinyin string corresponding to each character in the initial recognition result is obtained. The at least one sentence pinyin string corresponding to the initial recognition result is determined based on the at least one candidate character pinyin string corresponding to the character. The pinyin-corrected recognition result is generated by performing pinyin correction on the initial recognition result based on the at least one sentence pinyin string. Therefore, the accuracy of the speech recognition result is improved.

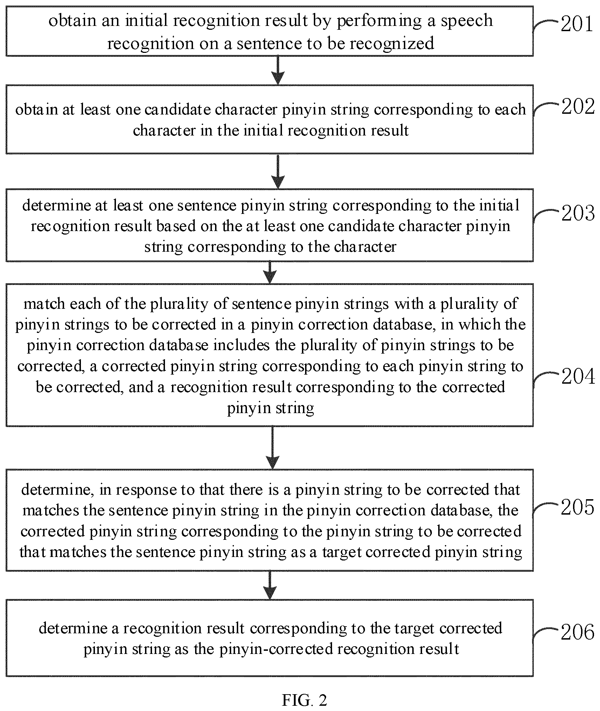

Based on the above-mentioned analysis, in the embodiments of the present disclosure, the initial recognition result is obtained by performing the speech recognition on the sentence to be recognized. The pinyin-corrected recognition result is generated by performing the pinyin correction on the initial recognition result. In combination with FIG. 2, in the speech recognition method according to the present disclosure, the process of performing the pinyin correction on the initial recognition result is further described.

FIG. 2 is a flowchart of a speech recognition method according to Embodiment 2 of the present disclosure.

As shown in FIG. 2, the speech recognition method includes the following steps.

In step 201, an initial recognition result is obtained by performing a speech recognition on a sentence to be recognized.

In step 202, at least one candidate character pinyin string corresponding to each character in the initial recognition result is obtained.

For the specific implementation process and principle of the above steps 201-202, reference may be made to the description of the above embodiments, and details are not repeated here.

In step 203, at least one sentence pinyin string corresponding to the initial recognition result is determined based on the at least one candidate character pinyin string corresponding to the character.

In an exemplary embodiment, step 203 can be implemented by: for each character, selecting a candidate character pinyin string from the at least one candidate character pinyin string corresponding to the character as a target character pinyin string; splicing target character pinyin strings of selected characters based on a sequence of characters in the initial recognition result; and determining a spliced pinyin string as the sentence pinyin string corresponding to the initial recognition result.

For example, suppose that the initial recognition result is " 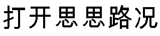 ", the candidate character pinyin string "da" corresponding to " 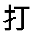 ", the candidate character pinyin string "kai" corresponding to " 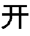 ", two candidate character pinyin strings of "shi" and "si" corresponding to each " 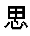 " respectively, the candidate character pinyin string "lu" corresponding to " 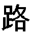 " and the candidate character pinyin string "kuang" corresponding to " 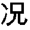 " are obtained. For each character, a candidate character pinyin string is determined from the at least one candidate character pinyin string corresponding to the character as the target character pinyin string. Assuming that "da", "kai", "shi" and "si", "lu" and "kuang" are selected as the target character pinyin strings, according to the order of " 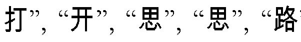 " and " 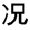 ", the selected multiple target character pinyin strings are spliced to obtain the sentence pinyin string of "dakaisisilukuang" corresponding to the initial recognition result.

Similarly, when "da", "kai", "shi" and "si", "lu" and "kuang" are selected as the target character pinyin strings, these target character pinyin strings are spliced according to the order of " 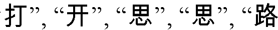 " and " 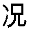 ", to obtain the sentence pinyin string of "dakaishisilukuang" corresponding to the initial recognition result. When "da", "kai", "si" and "shi", "lu" and "kuang" are selected as the target character pinyin strings, these target character pinyin strings are spliced according to the order of " 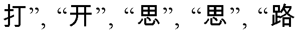 " and " 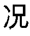 ", to obtain the sentence pinyin string of "dakaisishilukuang" corresponding to the initial recognition result. When "da", "kai", "shi" and "shi", "lu" and "kuang" are selected as the target character pinyin strings, these target character pinyin strings are spliced according to the order of " 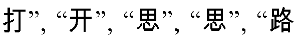 " and " 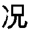 ", to obtain the sentence pinyin string of "dakaishishilukuang" corresponding to the initial recognition result.

Based on the above-mentioned example, in the embodiments of the present disclosure, in each character corresponding to initial recognition result, when each character corresponds to a character pinyin string, the initial recognition result corresponds to a sentence pinyin string. In each character corresponding to the initial recognition result, when at least one character corresponds to multiple character pinyin strings, the initial recognition result corresponds to multiple sentence pinyin strings, and the number of sentence pinyin strings is a product of a number of character pinyin strings corresponding to each character in the initial recognition result.

Taking the initial recognition result corresponding to a plurality of sentence pinyin strings as an example, the process of carrying out the pinyin correction on the initial recognition result according to the plurality of sentence pinyin strings is described.

In step 204, each of the plurality of sentence pinyin strings is matched with a plurality of pinyin strings to be corrected in a pinyin correction database, in which the pinyin correction database includes the plurality of pinyin strings to be corrected, a corrected pinyin string corresponding to each pinyin string to be corrected, and a recognition result corresponding to the corrected pinyin string.

In step 205, in response to that there is a pinyin string to be corrected that matches the sentence pinyin string in the pinyin correction database, the corrected pinyin string corresponding to the pinyin string to be corrected that matches the sentence pinyin string is determined as a target corrected pinyin string.

In step 206, a recognition result corresponding to the target corrected pinyin string is determined as the pinyin-corrected recognition result.

In an exemplary embodiment, the pinyin correction database can be preset. The pinyin correction database includes a plurality of pinyin strings to be corrected, the corrected pinyin string corresponding to each pinyin string to be corrected and the recognition result corresponding to the corrected pinyin string. Thus, after determining the plurality of sentence pinyin strings corresponding to the initial recognition result, for each sentence pinyin string in the plurality of sentence pinyin strings, the sentence pinyin string is matched with a plurality of pinyin strings to be corrected in the pinyin correction database. In response to that there is a pinyin string to be corrected that matches the sentence pinyin string in the pinyin correction database, the corrected pinyin string corresponding to the pinyin string to be corrected that matches the sentence pinyin string is determined as a target corrected pinyin string. Then, a recognition result corresponding to the target corrected pinyin string is determined as the pinyin-corrected recognition result, to realize the pinyin correction of the initial recognition result.

For example, suppose that as shown in Table 1, the preset pinyin correction database includes a plurality of pinyin strings to be corrected, a corrected pinyin string corresponding to each pinyin string to be corrected, and a recognition result corresponding to the corrected pinyin string.

**Table 1 Part of the data stored in the pinyin correction database**

| pinyin string to be corrected | corrected pinyin string | recognition result corresponding to the corrected pinyin string |
|---|---|---|
| zangsan, zhangsan, zangshan, zangsan | zhangsan | 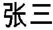 (a Chinese name) |
| lisi, lishi | lisi | 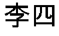 (a Chinese name) |
| dakaisisilukuang, dakaishishilukuang, dakaishisilukuang, dakaisishilukuang | dakaishishilukuang | 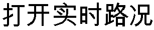 (a Chinese sentence, which means turning on the real-time traffic monitor) |
| dakaihoubeixiang, dakaihoubeixian, | dakaihoubeixiang | 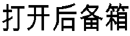 (a Chinese sentence, which means opening the trunk) |
| qiaoqitianchuang, qiaoqitianchuan | qiaoqitianchuang | 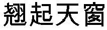 (a Chinese sentence, which means tilting the sunroof) |
| ...... | | |

Assuming that the sentence pinyin strings corresponding to the initial recognition result of " 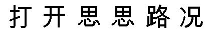 " are "dakaisisilukuang", "dakaishisilukuang", "dakaisishilukuang" and "dakaishishilukuang", then each sentence pinyin string of the four sentence pinyin strings corresponding to the initial recognition result is matched with a plurality of pinyin strings to be corrected in the preset pinyin correction database. For the above-mentioned 4 sentence pinyin strings, there are matching pinyin strings to be corrected in preset pinyin correction database, the corrected pinyin string corresponding to the pinyin string to be corrected matching the 4 sentence pinyin strings is determined as the target corrected pinyin string. Since the corrected pinyin string corresponding to the pinyin string to be corrected matching the 4 sentence strings is "dakaishishilukuang", then "dakaishishilukuang" can be determined as the target corrected pinyin string, and the recognition result of " 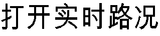 " corresponding to "dakaishishilukuang" can be determined as the pinyin-corrected recognition result.

It should be noted that, when there are a plurality of sentence pinyin strings corresponding to the initial recognition result, for each sentence pinyin string in the plurality of sentence pinyin strings, after the sentence pinyin string is matched with a plurality of pinyin strings to be corrected in the pinyin correction database, if there are pinyin strings to be corrected that match the plurality of sentence pinyin strings respectively, and the plurality of pinyin strings to be corrected correspond to different corrected pinyin strings, it is necessary to determine the recognition results corresponding to the plurality of different corrected pinyin strings respectively as the pinyin-corrected identification results.

According to the speech recognition method of the embodiments of the present disclosure, after obtaining at least one candidate character pinyin string corresponding to each character in the initial recognition result, for each character, a candidate character pinyin string is selected from the at least one candidate character pinyin string corresponding to the character as a target character pinyin string. Then, target character pinyin strings of selected characters are spliced based on a sequence of characters in the initial recognition result. Thus the pinyin string after the splicing is determined as the sentence pinyin string corresponding to the initial recognition result, in response to that at least one character of the initial recognition result corresponds to a plurality of character pinyin strings, a plurality of sentence pinyin strings corresponding to the initial recognition result are obtained, and then each sentence pinyin string in the plurality of sentence pinyin strings is matched with the plurality of pinyin strings to be corrected in the pinyin correction database. The pinyin-corrected identification result can be obtained according to the matching result, compared to directly matching the initial recognition result with the recognition result to be corrected and the corrected recognition result in the database through Chinese matching mode, to carry out the mode of correcting the initial recognition result, the matching success rate of the sentence pinyin string with the pinyin string to be corrected in the pinyin correction database is higher, thereby improving the correction rate of the initial recognition result, and then improving the accuracy rate of the speech recognition result.

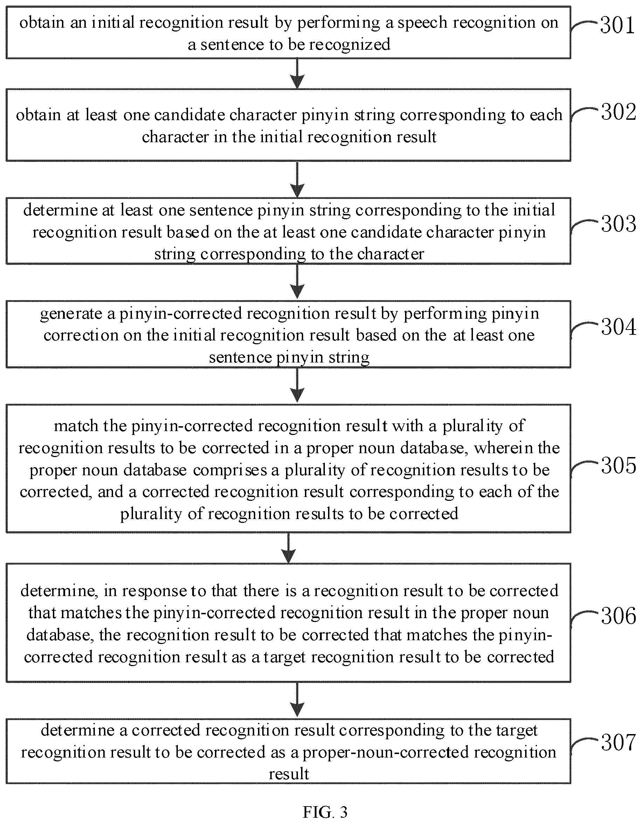

Known by above-mentioned analysis, in the embodiments of the present disclosure, the speech recognition is performed on the sentence to be recognized, to obtain the initial recognition result. The pinyin correction is performed on the initial recognition result, to generate the pinyin-corrected recognition result. In exemplary implementation, there may be situations where the pinyin correction is unsuccessfully performed in the pinyin-corrected identification result, for example, there is no pinyin string to be corrected that matches the sentence pinyin string corresponding to the initial identification result in the pinyin correction database, or there may be errors in proper nouns in the pinyin-corrected identification result. For example, when the " 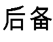 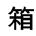 (trunk)" is identified as the " 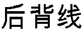 ". For the above situation, in combination with FIG. 3, the speech recognition method of the present disclosure will be further described.

FIG. 3 is a flowchart of a speech recognition method according to Embodiment 3 of the present disclosure. As shown in FIG. 3, the speech recognition method includes the following steps.

In step 301, an initial recognition result is obtained by performing a speech recognition on a sentence to be recognized.

In step 302, at least one candidate character pinyin string corresponding to each character in the initial recognition result is obtained.

In step 303, at least one sentence pinyin string corresponding to the initial recognition result is determined based on the at least one candidate character pinyin string corresponding to the character.

In step 304, a pinyin-corrected recognition result is generated by performing pinyin correction on the initial recognition result based on the at least one sentence pinyin string.

For the specific implementation process and principle of steps 301-304, reference may be made to the description of the above-mentioned embodiments, which will not be repeated here.

In step 305, each of the plurality of sentence pinyin strings is matched with a plurality of pinyin strings to be corrected in a pinyin correction database, in which the pinyin correction database includes the plurality of pinyin strings to be corrected, a corrected pinyin string corresponding to each pinyin string to be corrected, and a recognition result corresponding to the corrected pinyin string.

Proper nouns are nouns unique to people, places and things, such as " 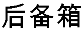 (a Chinese noun, which means a trunk)" and " 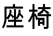 (a Chinese noun, which means a seat)".

In step 306, in response to that there is a pinyin string to be corrected that matches the sentence pinyin string in the pinyin correction database, the corrected pinyin string corresponding to the pinyin string to be corrected that matches the sentence pinyin string is determined as a target corrected pinyin string.

In step 307, a recognition result corresponding to the target corrected pinyin string is determined as the pinyin-corrected recognition result.

In an exemplary embodiment, a proper noun database can be preset. The proper noun database includes a plurality of recognition results to be corrected, and a corrected recognition result corresponding to each of the plurality of recognition results to be corrected. After generating the pinyin-corrected recognition result, the pinyin-corrected recognition result is matched with a plurality of recognition results to be corrected in a proper noun database, in response to that there is a recognition result to be corrected that matches the pinyin-corrected recognition result in the proper noun database, the recognition result to be corrected that matches the pinyin-corrected recognition result is determined as a target recognition result to be corrected. A corrected recognition result corresponding to the target recognition result to be corrected is determined as a proper-noun-corrected recognition result.

It should be noted that, in the embodiments of the present disclosure, the mode that each sentence pinyin string corresponding to the initial recognition result is matched with the pinyin string to be corrected in the preset pinyin correction database in the above-described embodiments is adopted to perform the pinyin correction on the initial recognition result, to obtain the pinyin-corrected recognition result. In a possible implementation, for one or more sentence pinyin strings corresponding to the initial recognition result, there may be matching pinyin strings to be corrected in the pinyin correction database, at this moment, the corresponding pinyin string to be corrected corresponding to the matching pinyin string is determined to be the target corrected pinyin string, the identification result corresponding to the target corrected pinyin string is determined as the pinyin-corrected identification result, and the pinyin-corrected identification result is matched with the plurality of identification results to be corrected in the proper noun database. In another possible implementation, there may not be a pinyin string to be corrected that matches any sentence pinyin string corresponding to the initial recognition result in the pinyin correction database, that is, the target corrected pinyin string is not obtained. At this time, the initial recognition result is determined as the pinyin-corrected recognition result, which is matched with the plurality of recognition results to be corrected in the proper noun database.

That is, in the embodiments of the present disclosure, after successfully obtaining the pinyin-corrected recognition result of the initial recognition result through the pinyin correction, further proper noun correction is performed on the pinyin-corrected recognition result, and when the pinyin-corrected recognition result of the initial identification result is not obtained successfully through the pinyin correction, the proper noun correction is directly performed on the initial recognition result.

For example, it is assumed that the preset proper noun database includes a plurality of recognition results to be corrected, and a corrected recognition result corresponding to each of the plurality of recognition results to be corrected, including the identification result to be corrected " 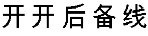 (a wrong Chinese sentence, which means opening the backup line)" and the corresponding recognition result of " 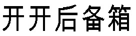 (a Chinese sentence, which means opening the trunk)". Suppose the initial recognition result is " 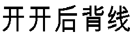 ", and when the pinyin correction is performed, there is no pinyin string to be corrected that matches any one sentence pinyin string in the at least one sentence pinyin string corresponding to " 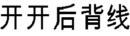 " in the pinyin correction database, that is, the pinyin-corrected recognition result of the initial recognition result is unsuccessfully obtained through the pinyin correction, then the initial recognition result of " 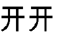 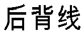 " is determined as the pinyin-corrected recognition result, which can be matched with the plurality of the recognition results to be corrected in the proper noun database. Since there is a recognition result to be corrected that matches " 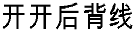 " in the proper noun database, the recognition result to be corrected that matches " 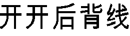 " can be determined as the target recognition result to be corrected, and the corrected identification result of " 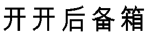 " corresponding to the identification result to be corrected is determined as the proper-noun-corrected recognition result.

According to the speech recognition method according to the embodiments of the present disclosure, the initial recognition result is obtained by performing the speech recognition on the sentence to be recognized. The at least one candidate character pinyin string corresponding to each character in the initial recognition result is obtained. The at least one sentence pinyin string corresponding to the initial recognition result is determined based on the at least one candidate character pinyin string corresponding to the character. The pinyin-corrected recognition result is generated by performing pinyin correction on the initial recognition result based on the at least one sentence pinyin string. The pinyin-corrected recognition result is matched with a plurality of identification results to be corrected in the proper noun database, in response to that there is a recognition result to be corrected that matches the pinyin-corrected recognition result in the proper noun database, the recognition result to be corrected that matches the pinyin-corrected recognition result is determined as a target recognition result to be corrected. A corrected recognition result corresponding to the target recognition result to be corrected is determined as a proper-noun-corrected recognition result. Therefore, the accuracy of the speech recognition result is further improved.

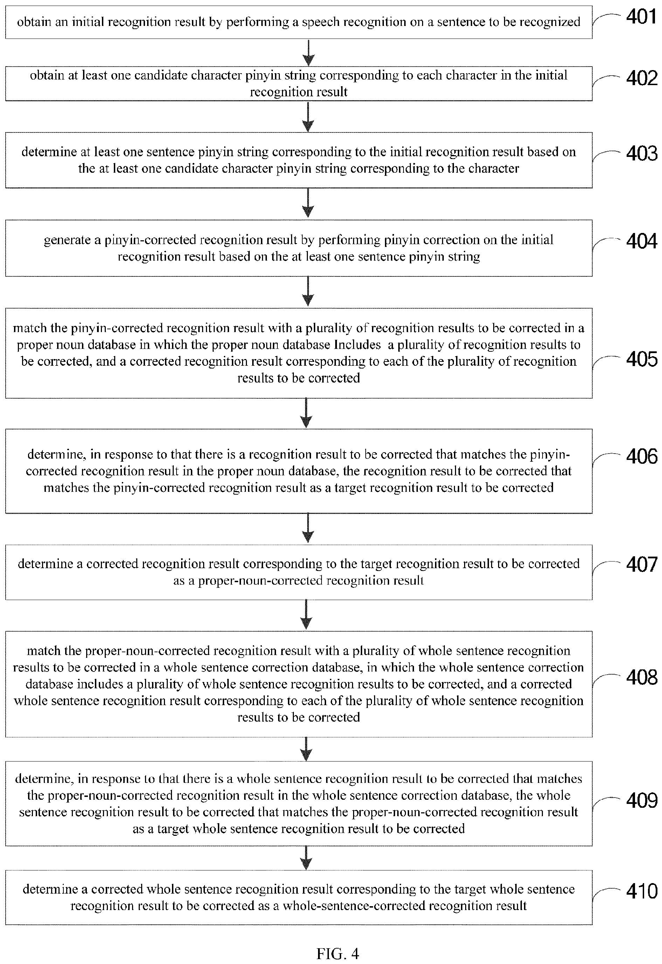

Based on the above-mentioned analysis, in the embodiments of the present disclosure, the initial recognition result is obtained by performing the speech recognition on the sentence to be recognized. The pinyin-corrected recognition result is generated by performing the pinyin correction on the initial recognition result, the proper nouns correction is performed on the pinyin-corrected recognition result, to further improve the accuracy of the speech recognition result. In the exemplary embodiment, the proper-noun-corrected recognition result may have a whole sentence error, for example, the result does not match the actual speech recognition application scenario, and the sentence " 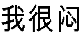 (a Chinese sentence, which means that I am bored)" required to instruct the sunroof of the vehicle to open is identified as " 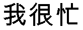 (a Chinese sentence, which means that I am busy)". In view of the above situation, the speech recognition method according to the present disclosure will be further described below with reference to FIG. 4.

FIG. 4 is a flowchart of a speech recognition method according to Embodiment 4 of the present disclosure. As shown in FIG. 4, the speech recognition method includes the following steps.

In step 401, an initial recognition result is obtained by performing a speech recognition on a sentence to be recognized.

In step 402, at least one candidate character pinyin string corresponding to each character in the initial recognition result is obtained.

In step 403, at least one sentence pinyin string corresponding to the initial recognition result is determined based on the at least one candidate character pinyin string corresponding to the character.

In step 404, a pinyin-corrected recognition result is generated by performing pinyin correction on the initial recognition result based on the at least one sentence pinyin string.

In step 405, the pinyin-corrected recognition result is matched with a plurality of recognition results to be corrected in a proper noun database, the proper noun database includes a plurality of recognition results to be corrected, and a corrected recognition result corresponding to each of the plurality of recognition results to be corrected.

In step 406, in response to that there is a recognition result to be corrected that matches the pinyin-corrected recognition result in the proper noun database, the recognition result to be corrected that matches the pinyin-corrected recognition result is determined as a target recognition result to be corrected.

In step 407, a corrected recognition result corresponding to the target recognition result to be corrected is determined as a proper-noun-corrected recognition result.

For the specific implementation process and principle of the above steps 401-407, reference may be made to the description of the above embodiments, and details are not repeated here.

In step 408, the proper-noun-corrected recognition result is matched with a plurality of whole sentence recognition results to be corrected in a whole sentence correction database, the whole sentence correction database includes a plurality of whole sentence recognition results to be corrected, and a corrected whole sentence recognition result corresponding to each of the plurality of whole sentence recognition results to be corrected.

In step 409, in response to that there is a whole sentence recognition result to be corrected that matches the proper-noun-corrected recognition result in the whole sentence correction database, the whole sentence recognition result to be corrected that matches the proper-noun-corrected recognition result is determined as a target whole sentence recognition result to be corrected.

In step 410, a corrected whole sentence recognition result corresponding to the target whole sentence recognition result to be corrected is determined as a whole-sentence-corrected recognition result.

In an exemplary embodiment, the whole sentence correction database can be preset. The whole sentence correction database includes a plurality of whole sentence recognition results to be corrected, and a corrected whole sentence recognition result corresponding to each of the plurality of whole sentence recognition results to be corrected. Therefore, after determining the proper-noun-corrected recognition result, the proper-noun-corrected recognition result is matched with a plurality of whole sentence recognition results to be corrected in the whole sentence correction database, in response to that there is a whole sentence recognition result to be corrected that matches the proper-noun-corrected recognition result in the whole sentence correction database, the whole sentence recognition result to be corrected that matches the proper-noun-corrected recognition result is determined as a target whole sentence recognition result to be corrected. A corrected whole sentence recognition result corresponding to the target whole sentence recognition result to be corrected is determined as a whole-sentence-corrected recognition result.

A plurality of whole sentence recognition results to be corrected in the whole sentence correction database, and the whole-sentence-corrected recognition result corresponding to each whole sentence recognition result to be corrected, can be set with reference to each interaction sentence in the speech recognition application scenario and the corresponding common error recognition results. For example, in a vehicle, the operation of opening the window is instructed by " 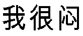 (a Chinese sentence, which means that I am bored)", which could be misidentified as " 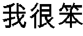 (a Chinese sentence, which means that I am silly)" and " 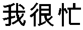 (a Chinese sentence, which means that I am busy)", then the whole sentence correction database may include the recognition results of the whole sentence to be corrected " 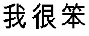 " and " 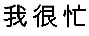 ", and the corresponding whole-sentence-corrected recognition result of " 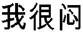 ".

It should be noted that, in the embodiments of the present disclosure, in response to that there is a recognition result to be corrected that matches the pinyin-corrected recognition result in the proper noun database, the recognition result to be corrected that matches the pinyin-corrected recognition result is determined as a target recognition result to be corrected, a corrected recognition result corresponding to the target recognition result to be corrected is determined as a proper-noun-corrected recognition result. When there is no identification result to be corrected that matches the pinyin-corrected identification result in the proper noun database, the pinyin-corrected identification result is determined as the proper-noun-corrected recognition result, which is matched with the plurality of whole sentence recognition results to be corrected in the whole sentence correction database.

That is, in the embodiments of the present disclosure, after the proper-noun-corrected recognition result is obtained successfully by proper noun correction, whole sentence correction is performed on the proper-noun-corrected recognition result. Alternatively, when the proper-noun-corrected recognition result is not obtained successfully through proper noun correction, it is also possible to perform the whole sentence correction directly on the pinyin-corrected identification result. The pinyin-corrected identification result here may be the pinyin-corrected identification result obtained successfully through the pinyin correction, or the initial identification result when the pinyin correction has not been successfully performed, which is not limited in the present disclosure.

For example, it is assumed that the preset whole sentence correction database includes a plurality of whole sentence recognition results to be corrected, and the corrected whole sentence recognition result corresponding to each whole sentence recognition result to be corrected, including the whole-sentence-corrected recognition results of " 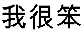 " and " 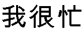 ", and the corresponding whole-sentence-corrected recognition result of " 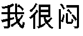 ". Assuming that proper-noun-corrected recognition result is " 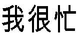 ", the recognition result is matched with a plurality of whole sentences to be corrected in the whole sentence correction database. Since there are whole sentence recognition results to be corrected matching " 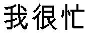 " in the whole sentence correction database, the whole sentence recognition results to be corrected matching " 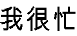 " is determined as the target whole sentence recognition results to be corrected, and the corrected whole sentence recognition result " 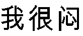 " corresponding to " 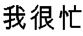 " is determined as the whole-sentence-corrected recognition result, so as to perform the operation of opening the sunroof of the vehicle.

According to the speech recognition method according to the embodiments of the present disclosure, the initial recognition result is obtained by performing the speech recognition on the sentence to be recognized. The at least one candidate character pinyin string corresponding to each character in the initial recognition result is obtained. The at least one sentence pinyin string corresponding to the initial recognition result is determined based on the at least one candidate character pinyin string corresponding to the character. The pinyin-corrected recognition result is generated by performing pinyin correction on the initial recognition result based on the at least one sentence pinyin string. The pinyin-corrected recognition result is matched with a plurality of identification results to be corrected in the proper noun database, in response to that there is a recognition result to be corrected that matches the pinyin-corrected recognition result in the proper noun database, the recognition result to be corrected that matches the pinyin-corrected recognition result is determined as a target recognition result to be corrected. A corrected recognition result corresponding to the target recognition result to be corrected is determined as a proper-noun-corrected recognition result. Therefore, the accuracy of the speech recognition result is further improved.

According to the speech recognition method according to the embodiments of the present disclosure, the initial recognition result is obtained by performing the speech recognition on the sentence to be recognized. After performing the pinyin correction and the proper nouns correction on the initial recognition result, the proper-noun-corrected recognition result is matched with the plurality of whole sentence recognition results to be corrected in the whole sentence correction database. When there is a whole sentence recognition result to be corrected that matches the proper-noun-corrected recognition result in the whole sentence correction database, the whole sentence recognition result to be corrected that matches the proper-noun-corrected recognition result is determined as the target whole sentence recognition result to be corrected. The corrected whole sentence recognition result corresponding to the target whole sentence recognition result to be corrected is determined as the corrected whole sentence recognition result. Therefore, the accuracy of speech recognition result is further improved. In addition, in the speech recognition method according to the embodiments of the present disclosure, after the initial recognition result is obtained by performing the speech recognition on the sentence to be recognized, the preset pinyin correction database, the proper noun database and the whole sentence correction database are adopted for database query operation, to perform the pinyin correction, the proper noun correction and the whole sentence correction on the initial recognition result, so that the speech recognition engine does not need to have the function of providing a recognition result set, thus the dependence on the speech recognition engine during speech recognition is reduced, the flexibility of speech recognition is improved, and since the correction process of the initial recognition result is a database query operation, the consumption of performance resources is small.

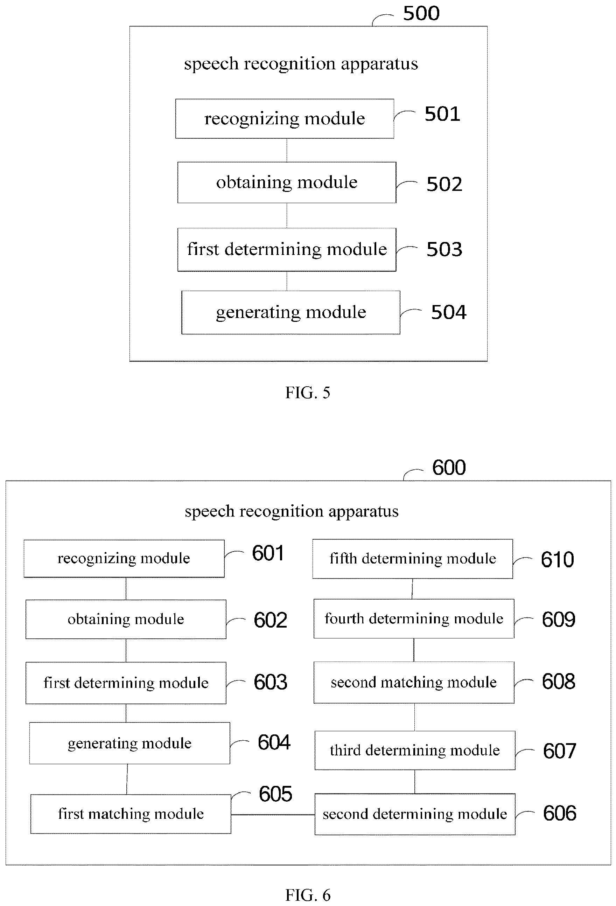

The speech recognition apparatus according to the present disclosure will be described below with reference to FIG. 5.

FIG. 5 is a schematic diagram of a speech recognition apparatus according to Embodiment 5 of the present disclosure.

As shown in FIG. 5, the speech recognition apparatus 500 according to the present disclosure includes: a recognizing module 501, an obtaining module 502, a first determining module 503 and a generating module 504.

The recognizing module 501 is configured to obtain an initial recognition result by performing a speech recognition on a sentence to be recognized.

The obtaining module 502 is configured to obtain at least one candidate character pinyin string corresponding to each character in the initial recognition result.

The first determining module 503 is configured to determine at least one sentence pinyin string corresponding to the initial recognition result based on the at least one candidate character pinyin string corresponding to the character.

The generating module 504 is configured to generate a pinyin-corrected recognition result by performing pinyin correction on the initial recognition result based on the at least one sentence pinyin string.

It should be noted that, the speech recognition apparatus according to the embodiments can execute the speech recognition method described in the preceding embodiments. The speech recognition apparatus may be an electronic device, or may be configured in the electronic device, so as to improve the accuracy of the speech recognition result.

The electronic device may be any stationary or mobile computing device capable of data processing, such as mobile computing device such as notebook computers, smart phones, and wearable devices, or stationary computing device such as desktop computers, or servers, or other types of computing devices, which are not limited in the present disclosure.

It should be noted that the foregoing description of the embodiments of the speech recognition method is also applicable to the speech recognition apparatus according to the present disclosure, and details are not repeated here.

With the speech recognition apparatus according to the embodiment of the present disclosure, firstly the initial recognition result is obtained by performing the speech recognition on the sentence to be recognized. The at least one candidate character pinyin string corresponding to each character in the initial recognition result is obtained. The at least one sentence pinyin string corresponding to the initial recognition result is determined based on the at least one candidate character pinyin string corresponding to the character. Further, the pinyin-corrected recognition result is generated by performing pinyin correction on the initial recognition result based on the at least one sentence pinyin string. Therefore, the accuracy of the speech recognition result is improved.

The speech recognition apparatus according to the present disclosure will be described below with reference to FIG. 6.

FIG. 6 is a schematic diagram of a speech recognition apparatus according to Embodiment 6 of the present disclosure.

As shown in FIG. 6, the speech recognition apparatus 600 may include: a recognizing module 601, an obtaining module 602, a first determining module 603 and a generating module 604. The recognizing module 601, the obtaining module 602, the first determining module 603 and the generating module 604 shown in FIG. 6 have the same function and structure as the recognizing module 501, the obtaining module 502, the first determining module 503 and the generating module 504 shown in FIG. 5.

In an example embodiment, the first determining module 603 includes: a selecting unit, a splicing unit and a first determining unit.

The selecting unit is configured to, for each character, select a candidate character pinyin string from the at least one candidate character pinyin string corresponding to the character as a target character pinyin string.

The splicing unit is configured to splice target character pinyin strings of selected characters based on a sequence of characters in the initial recognition result.

The first determining unit is configured to determine a spliced pinyin string as the sentence pinyin string corresponding to the initial recognition result.

In an example embodiment, there are a plurality of sentence pinyin strings, and the generating module includes: a matching unit, a second determining unit and a third determining unit.

The matching unit is configured to match each of the plurality of sentence pinyin strings with a plurality of pinyin strings to be corrected in a pinyin correction database, in which the pinyin correction database includes the plurality of pinyin strings to be corrected, a corrected pinyin string corresponding to each pinyin string to be corrected, and a recognition result corresponding to the corrected pinyin string.

The second determining unit is configured to determine, in response to that there is a pinyin string to be corrected that matches the sentence pinyin string in the pinyin correction database, the corrected pinyin string corresponding to the pinyin string to be corrected that matches the sentence pinyin string as a target corrected pinyin string.

The third determining unit is configured to determine a recognition result corresponding to the target corrected pinyin string as the pinyin-corrected recognition result.

In an example embodiment, the apparatus 600 further includes: a first matching module 605, a second determining module 606 and a third determining module 607.

The first matching module 605 is configured to match the pinyin-corrected recognition result with a plurality of recognition results to be corrected in a proper noun database, in which the proper noun database includes a plurality of recognition results to be corrected, and a corrected recognition result corresponding to each of the plurality of recognition results to be corrected.

The second determining module 606 is configured to determine, in response to that there is a recognition result to be corrected that matches the pinyin-corrected recognition result in the proper noun database, the recognition result to be corrected that matches the pinyin-corrected recognition result as a target recognition result to be corrected.

The third determining module 607 is configured to determine a corrected recognition result corresponding to the target recognition result to be corrected as a proper-noun-corrected recognition result.

In an example embodiment, the apparatus 600 further includes: a second matching module 608, a fourth determining module 609 and a fifth determining module 610.

The second matching module 608 is configured to match the proper-noun-corrected recognition result with a plurality of whole sentence recognition results to be corrected in a whole sentence correction database, in which the whole sentence correction database includes a plurality of whole sentence recognition results to be corrected, and a corrected whole sentence recognition result corresponding to each of the plurality of whole sentence recognition results to be corrected.

The fourth determining module 609 is configured to determine, in response to that there is a whole sentence recognition result to be corrected that matches the proper-noun-corrected recognition result in the whole sentence correction database, the whole sentence recognition result to be corrected that matches the proper-noun-corrected recognition result as a target whole sentence recognition result to be corrected.

The fifth determining module 610 is configured to determine a corrected whole sentence recognition result corresponding to the target whole sentence recognition result to be corrected as a whole-sentence-corrected recognition result.

It should be noted that the foregoing description of the embodiment of the speech recognition method is also applicable to the speech recognition apparatus according to the present disclosure, and will not be repeated here.

With the speech recognition apparatus according to the embodiment of the present disclosure, firstly the initial recognition result is obtained by performing the speech recognition on the sentence to be recognized. The at least one candidate character pinyin string corresponding to each character in the initial recognition result is obtained. The at least one sentence pinyin string corresponding to the initial recognition result is determined based on the at least one candidate character pinyin string corresponding to the character. Further, the pinyin-corrected recognition result is generated by performing pinyin correction on the initial recognition result based on the at least one sentence pinyin string. Therefore, the accuracy of the speech recognition result is improved.

According to embodiments of the present disclosure, the present disclosure also provides an electronic device, a readable storage medium and a computer program product.

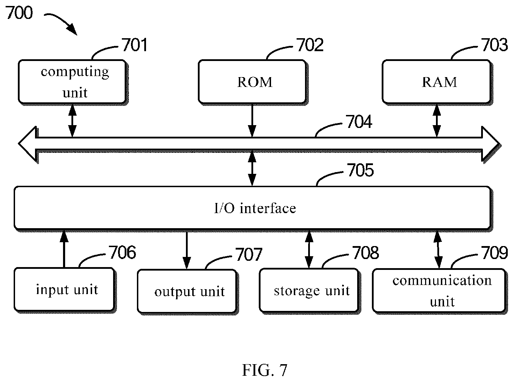

FIG. 7 is a block diagram of an electronic device 700 according to embodiments of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the present disclosure described and/or required herein.

As illustrated in FIG. 7, the device 700 includes a computing unit 701 performing various appropriate actions and processes based on computer programs stored in a read-only memory (ROM) 702 or computer programs loaded from the storage unit 708 to a random access memory (RAM) 703. In the RAM 703, various programs and data required for the operation of the device 800 are stored. The computing unit 701, the ROM 702, and the RAM 703 are connected to each other through a bus 704. An input/output (I/O) interface 705 is also connected to the bus 704.

Components in the device 700 are connected to the I/O interface 705, including: an inputting unit 706, such as a keyboard, a mouse; an outputting unit 707, such as various types of displays, speakers; a storage unit 708, such as a disk, an optical disk; and a communication unit 709, such as network cards, modems, wireless communication transceivers, and the like. The communication unit 709 allows the device 700 to exchange information/data with other devices through a computer network such as the Internet and/or various telecommunication networks.

The computing unit 701 may be various general-purpose and/or dedicated processing components with processing and computing capabilities. Some examples of computing unit 701 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 701 executes the various methods and processes described above, such as the speech recognition method. For example, in some embodiments, the method may be implemented as a computer software program, which is tangibly contained in a machine-readable medium, such as the storage unit 708. In some embodiments, part or all of the computer program may be loaded and/or installed on the device 700 via the ROM 702 and/or the communication unit 709. When the computer program is loaded on the RAM 703 and executed by the computing unit 701, one or more steps of the method described above may be executed. Alternatively, in other embodiments, the computing unit 701 may be configured to perform the speech recognition method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the present disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system to solve the problem that there are the defects of difficult management and weak business expansion in the traditional physical hosts and (Virtual Private Server) VPS services. The server may be a server of a distributed system, or a server combined with a block-chain.

The present disclosure relates to the field of computer technology, in particular to the field of artificial intelligence technologies such as speech recognition and natural language processing.

It is noted that artificial intelligence is a discipline that studies certain thinking processes and intelligent behaviors (such as learning, reasoning, thinking and planning) that allow computers to simulate life, which has both hardware-level technologies and software-level technologies. Artificial intelligence hardware technology generally includes technologies such as sensors, dedicated artificial intelligence chips, cloud computing, distributed storage, and big data processing. Artificial intelligence software technology generally includes computer vision technology, speech recognition technology, natural language processing technology, and its learning/deep learning, big data processing technology, knowledge map technology and other aspects.

According to the technical solution of the embodiments of the present disclosure, firstly the initial recognition result is obtained by performing the speech recognition on the sentence to be recognized. The at least one candidate character pinyin string corresponding to each character in the initial recognition result is obtained. The at least one sentence pinyin string corresponding to the initial recognition result is determined based on the at least one candidate character pinyin string corresponding to the character. Further, the pinyin-corrected recognition result is generated by performing pinyin correction on the initial recognition result based on the at least one sentence pinyin string. Therefore, the accuracy of the speech recognition result is improved.

It should be understood that the various forms of processes shown above can be used to reorder, add or delete steps. For example, the steps described in the present disclosure could be performed in parallel, sequentially, or in a different order, as long as the desired result of the technical solution disclosed in the present disclosure is achieved, which is not limited herein.

The above specific embodiments do not constitute a limitation on the protection scope of the present disclosure. Those skilled in the art should understand that various modifications, combinations, sub-combinations and substitutions can be made according to design requirements and other factors.

## Claims

1. A speech recognition method, comprising:
obtaining (101; 201; 301; 401) an initial recognition result by performing a speech recognition on a sentence to be recognized;
obtaining (102; 202; 302; 402) at least one candidate character pinyin string corresponding to each character in the initial recognition result;
determining (103; 203; 303; 403) at least one sentence pinyin string corresponding to the initial recognition result based on the at least one candidate character pinyin string corresponding to the character; and
generating (104; 304; 404) a pinyin-corrected recognition result by performing pinyin correction on the initial recognition result based on the at least one sentence pinyin string,
the method is **characterized by**, after generating the pinyin-corrected recognition result by performing the pinyin correction on the initial recognition result, further comprising:
matching (405) the pinyin-corrected recognition result with a plurality of recognition results to be corrected in a proper noun database, wherein the proper noun database comprises a plurality of recognition results to be corrected, and a corrected recognition result corresponding to each of the plurality of recognition results to be corrected;
determining (406), in response to that there is a recognition result to be corrected that matches the pinyin-corrected recognition result in the proper noun database, the recognition result to be corrected that matches the pinyin-corrected recognition result as a target recognition result to be corrected; and
determining (407) a corrected recognition result corresponding to the target
HLZ:RKO recognition result to be corrected as a proper-noun-corrected recognition result,
after determining the corrected recognition result corresponding to the target recognition result to be corrected as the proper-noun-corrected recognition result, the method further comprises:
matching (408) the proper-noun-corrected recognition result with a plurality of whole sentence recognition results to be corrected in a whole sentence correction database, wherein the whole sentence correction database comprises a plurality of whole sentence recognition results to be corrected, and a corrected whole sentence recognition result corresponding to each of the plurality of whole sentence recognition results to be corrected;
determining (409), in response to that there is a whole sentence recognition result to be corrected that matches the proper-noun-corrected recognition result in the whole sentence correction database, the whole sentence recognition result to be corrected that matches the proper-noun-corrected recognition result as a target whole sentence recognition result to be corrected; and
determining (410) a corrected whole sentence recognition result corresponding to the target whole sentence recognition result to be corrected as a whole-sentence-corrected recognition result.

2. The method according to claim 1, determining the at least one sentence pinyin string corresponding to the initial recognition result based on the at least one candidate character pinyin string corresponding to each character, comprising:
for each character, selecting a candidate character pinyin string from the at least one candidate character pinyin string corresponding to the character as a target character pinyin string;
splicing target character pinyin strings of selected characters based on a sequence of characters in the initial recognition result; and
determining a spliced pinyin string as the sentence pinyin string corresponding to the initial recognition result.

3. The method according to claim 1 or 2, wherein there are a plurality of sentence pinyin strings, and generating the pinyin-corrected recognition result by performing pinyin correction on the initial recognition result based on the at least one sentence pinyin string, the method further comprises:
matching (204; 305) each of the plurality of sentence pinyin strings with a plurality of pinyin strings to be corrected in a pinyin correction database, wherein the pinyin correction database comprises the plurality of pinyin strings to be corrected, a corrected pinyin string corresponding to each pinyin string to be corrected, and a recognition result corresponding to the corrected pinyin string;
determining (205; 306), in response to that there is a pinyin string to be corrected that matches the sentence pinyin string in the pinyin correction database, the corrected pinyin string corresponding to the pinyin string to be corrected that matches the sentence pinyin string as a target corrected pinyin string; and
determining (206; 307) a recognition result corresponding to the target corrected pinyin string as the pinyin-corrected recognition result.

4. A speech recognition apparatus (500; 600), comprising:
a recognizing module (501; 601), configured to obtain an initial recognition result by performing a speech recognition on a sentence to be recognized;
an obtaining module (502; 602), configured to obtain at least one candidate character pinyin string corresponding to each character in the initial recognition result;
a first determining module (503; 603), configured to determine at least one sentence pinyin string corresponding to the initial recognition result based on the at least one candidate character pinyin string corresponding to the character; and
a generating module (504; 604), configured to generate a pinyin-corrected recognition result by performing pinyin correction on the initial recognition result based on the at least one sentence pinyin string,
the apparatus is **characterized by** further comprising:
a first matching module (605), configured to match the pinyin-corrected recognition result with a plurality of recognition results to be corrected in a proper noun database, wherein the proper noun database comprises a plurality of recognition results to be corrected, and a corrected recognition result corresponding to each of the plurality of recognition results to be corrected;
a second determining module (606), configured to determine, in response to that there is a recognition result to be corrected that matches the pinyin-corrected recognition result in the proper noun database, the recognition result to be corrected that matches the pinyin-corrected recognition result as a target recognition result to be corrected; and
a third determining module (607), configured to determine a corrected recognition result corresponding to the target recognition result to be corrected as a proper-noun-corrected recognition result,
the apparatus further comprises:
a second matching module (608), configured to match the proper-noun-corrected recognition result with a plurality of whole sentence recognition results to be corrected in a whole sentence correction database, wherein the whole sentence correction database comprises a plurality of whole sentence recognition results to be corrected, and a corrected whole sentence recognition result corresponding to each of the plurality of whole sentence recognition results to be corrected;
a fourth determining module (609), configured to determine, in response to that there is a whole sentence recognition result to be corrected that matches the proper-noun-corrected recognition result in the whole sentence correction database, the whole sentence recognition result to be corrected that matches the proper-noun-corrected recognition result as a target whole sentence recognition result to be corrected; and
a fifth determining module (610), configured to determine a corrected whole sentence recognition result corresponding to the target whole sentence recognition result to be corrected as a whole-sentence-corrected recognition result.

5. The apparatus according to claim 4, wherein the first determining module comprises:
a selecting unit, configured to, for each character, select a candidate character pinyin string from the at least one candidate character pinyin string corresponding to the character as a target character pinyin string;
a splicing unit, configured to splice target character pinyin strings of selected characters based on a sequence of characters in the initial recognition result; and
a first determining unit, configured to determine a spliced pinyin string as the sentence pinyin string corresponding to the initial recognition result.

6. The apparatus according to claim 4 or 5, wherein there are a plurality of sentence pinyin strings, and the generating module comprises:
a matching unit, configured to match each of the plurality of sentence pinyin strings with a plurality of pinyin strings to be corrected in a pinyin correction database, wherein the pinyin correction database comprises the plurality of pinyin strings to be corrected, a corrected pinyin string corresponding to each pinyin string to be corrected, and a recognition result corresponding to the corrected pinyin string;
a second determining unit, configured to determine, in response to that there is a pinyin string to be corrected that matches the sentence pinyin string in the pinyin correction database, the corrected pinyin string corresponding to the pinyin string to be corrected that matches the sentence pinyin string as a target corrected pinyin string; and
a third determining unit, configured to determine a recognition result corresponding to the target corrected pinyin string as the pinyin-corrected recognition result.

7. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method according to any of claims 1-3.

8. A non-transitory computer-readable storage medium storing computer instructions, wherein the computer instructions are configured to cause the computer to implement the method according to any of claims 1-3.

9. A computer program product comprising computer programs, wherein when the computer programs are executed by a processor, the method according to any of claims 1-3 is implemented.

## Patentansprüche

1. Spracherkennungsverfahren, umfassend:
Erhalten (101; 201; 301; 401) eines Anfangserkennungsergebnisses durch Durchführen einer Spracherkennung bei einem zu erkennenden Satz;
Erhalten (102; 202; 302; 402) mindestens einer Kandidatenzeichen-Pinyin-Zeichenfolge entsprechend jedem Zeichen in dem Anfangserkennungsergebnis;
Bestimmen (103; 203; 303; 403) mindestens einer Satz-Pinyin-Zeichenfolge entsprechend dem Anfangserkennungsergebnis basierend auf der mindestens einen Kandidatenzeichen-Pinyin-Zeichenfolge entsprechend dem Zeichen; und
Erzeugen (104; 304; 404) eines Pinyin-korrigierten Erkennungsergebnisses durch Durchführen einer Pinyin-Korrektur bei dem Anfangserkennungsergebnis basierend auf der mindestens einen Satz-Pinyin-Zeichenfolge,
wobei das Verfahren **dadurch gekennzeichnet ist, dass** es nach dem Erzeugen des Pinyin-korrigierten Erkennungsergebnisses durch Durchführen der Pinyin-Korrektur bei dem Anfangserkennungsergebnis ferner Folgendes umfasst:
Abgleichen (405) des Pinyin-korrigierten Erkennungsergebnisses mit einer Vielzahl von zu korrigierenden Erkennungsergebnissen in einer Eigennamendatenbank, wobei die Eigennamendatenbank eine Vielzahl von zu korrigierenden Erkennungsergebnissen und ein korrigiertes Erkennungsergebnis entsprechend jedem der Vielzahl von zu korrigierenden Erkennungsergebnissen umfasst;
Bestimmen (406) als Reaktion darauf, dass ein zu korrigierendes Erkennungsergebnis vorhanden ist, das mit dem Pinyin-korrigierten Erkennungsergebnis in der Eigennamendatenbank übereinstimmt, des zu korrigierenden Erkennungsergebnisses, das mit dem Pinyin-korrigierten Erkennungsergebnis übereinstimmt, als ein zu korrigierendes Zielerkennungsergebnis; und
Bestimmen (407) eines korrigierten Erkennungsergebnisses entsprechend dem zu korrigierenden Zielerkennungsergebnis als ein Eigennamen-korrigiertes Erkennungsergebnis,
wobei nach dem Bestimmen des korrigierten Erkennungsergebnisses entsprechend dem zu korrigierenden Zielerkennungsergebnis als das Eigennamen-korrigierte Erkennungsergebnis das Verfahren ferner Folgendes umfasst:
Abgleichen (408) des Eigennamen-korrigierten Erkennungsergebnisses mit einer Vielzahl von zu korrigierenden Ganzsatzerkennungsergebnissen in einer Ganzsatzkorrekturdatenbank, wobei die Ganzsatzkorrekturdatenbank eine Vielzahl von zu korrigierenden Ganzsatzerkennungsergebnissen und ein korrigiertes Ganzsatzerkennungsergebnis entsprechend jedem der Vielzahl von zu korrigierenden Ganzsatzerkennungsergebnissen umfasst;
Bestimmen (409) als Reaktion darauf, dass ein zu korrigierendes Ganzsatzerkennungsergebnis vorhanden ist, das mit dem Eigennamen-korrigierten Erkennungsergebnis in der Ganzsatzkorrekturdatenbank übereinstimmt, des zu korrigierenden Ganzsatzerkennungsergebnisses, das mit dem Eigennamen-korrigierten Erkennungsergebnis übereinstimmt, als ein zu korrigierendes Ziel-Ganzsatzerkennungsergebnis; und
Bestimmen (410) eines korrigierten Ganzsatzerkennungsergebnisses entsprechend dem zu korrigierenden Ziel-Ganzsatzerkennungsergebnis als ein Ganzsatz-korrigiertes Erkennungsergebnis.

2. Verfahren nach Anspruch 1, wobei das Bestimmen der mindestens einen Satz-Pinyin-Zeichenfolge entsprechend dem Anfangserkennungsergebnis basierend auf der mindestens einen Kandidatenzeichen-Pinyin-Zeichenfolge entsprechend jedem Zeichen Folgendes umfasst:
für jedes Zeichen, Auswählen einer Kandidatenzeichen-Pinyin-Zeichenfolge aus der mindestens einen Kandidatenzeichen-Pinyin-Zeichenfolge entsprechend dem Zeichen als eine Zielzeichen-Pinyin-Zeichenfolge;
Zusammenfügen von Zielzeichen-Pinyin-Zeichenfolgen von ausgewählten Zeichen basierend auf einer Sequenz von Zeichen in dem Anfangserkennungsergebnis; und
Bestimmen einer zusammengefügten Pinyin-Zeichenfolge als die Satz-Pinyin-Zeichenfolge entsprechend dem Anfangserkennungsergebnis.

3. Verfahren nach Anspruch 1 oder 2, wobei eine Vielzahl von Satz-Pinyin-Zeichenfolgen vorhanden sind, und das Pinyin-korrigierte Erkennungsergebnis durch Durchführen einer Pinyin-Korrektur bei dem Anfangserkennungsergebnis basierend auf der mindestens einen Satz-Pinyin-Zeichenfolge erzeugt wird, wobei das Verfahren ferner Folgendes umfasst:
Abgleichen (204; 305) jeder der Vielzahl von Satz-Pinyin-Zeichenfolgen mit einer Vielzahl von zu korrigierenden Pinyin-Zeichenfolgen in einer Pinyin-Korrekturdatenbank, wobei die Pinyin-Korrekturdatenbank die Vielzahl von zu korrigierenden Pinyin-Zeichenfolgen, eine korrigierte Pinyin-Zeichenfolge entsprechend jeder zu korrigierenden Pinyin-Zeichenfolge und ein Erkennungsergebnis entsprechend der korrigierten Pinyin-Zeichenfolge umfasst;
Bestimmen (205; 306) als Reaktion darauf, dass eine zu korrigierende Pinyin-Zeichenfolge vorhanden ist, die mit der Satz-Pinyin-Zeichenfolge in der Pinyin-Korrekturdatenbank übereinstimmt, der korrigierten Pinyin-Zeichenfolge entsprechend der zu korrigierenden Pinyin-Zeichenfolge, die mit der Satz-Pinyin-Zeichenfolge übereinstimmt, als eine korrigierte Ziel-Pinyin-Zeichenfolge; und
Bestimmen (206; 307) eines Erkennungsergebnisses entsprechend der korrigierten Ziel-Pinyin-Zeichenfolge als das Pinyin-korrigierte Erkennungsergebnis.

4. Spracherkennungsgerät (500; 600), umfassend:
ein Erkennungsmodul (501; 601), das konfiguriert ist, um ein Anfangserkennungsergebnis durch Durchführen einer Spracherkennung bei einem zu erkennenden Satz zu erhalten;
ein Erhaltungsmodul (502; 602), das konfiguriert ist, um mindestens eine Kandidatenzeichen-Pinyin-Zeichenfolge entsprechend jedem Zeichen in dem Anfangserkennungsergebnis zu erhalten;
ein erstes Bestimmungsmodul (503; 603), das konfiguriert ist, um mindestens eine Satz-Pinyin-Zeichenfolge entsprechend dem Anfangserkennungsergebnis basierend auf der mindestens einen Kandidatenzeichen-Pinyin-Zeichenfolge entsprechend dem Zeichen zu bestimmen; und
ein Erzeugungsmodul (504; 604), das konfiguriert ist, um ein Pinyin-korrigiertes Erkennungsergebnis durch Durchführen einer Pinyin-Korrektur bei dem Anfangserkennungsergebnis basierend auf der mindestens einen Satz-Pinyin-Zeichenfolge zu erzeugen,
wobei das Gerät **dadurch gekennzeichnet ist, dass** es ferner Folgendes umfasst:
ein erstes Abgleichungsmodul (605), das konfiguriert ist, um das Pinyin-korrigierte Erkennungsergebnis mit einer Vielzahl von zu korrigierenden Erkennungsergebnissen in einer Eigennamendatenbank abzugleichen, wobei die Eigennamendatenbank eine Vielzahl von zu korrigierenden Erkennungsergebnissen und ein korrigiertes Erkennungsergebnis entsprechend jedem der Vielzahl von zu korrigierenden Erkennungsergebnissen umfasst;
ein zweites Bestimmungsmodul (606), das konfiguriert ist, um als Reaktion darauf, dass ein zu korrigierendes Erkennungsergebnis vorhanden ist, das mit dem Pinyin-korrigierten Erkennungsergebnis in der Eigennamendatenbank übereinstimmt, das zu korrigierende Erkennungsergebnis, das mit dem Pinyin-korrigierten Erkennungsergebnis übereinstimmt, als das zu korrigierende Zielerkennungsergebnis zu bestimmen; und
ein drittes Bestimmungsmodul (607), das konfiguriert ist, um ein korrigiertes Erkennungsergebnis entsprechend dem zu korrigierenden Zielerkennungsergebnis als ein Eigennamen-korrigiertes Erkennungsergebnis zu bestimmen,
wobei das Gerät ferner Folgendes umfasst:
ein zweites Abgleichungsmodul (608), das konfiguriert ist, um das Eigennahmen-korrigierte Erkennungsergebnis mit einer Vielzahl von zu korrigierenden Ganzsatzerkennungsergebnissen in einer Ganzsatzkorrekturdatenbank abzugleichen, wobei die Ganzsatzkorrekturdatenbank eine Vielzahl von zu korrigierenden Ganzsatzerkennungsergebnissen und ein korrigiertes Ganzsatzerkennungsergebnis entsprechend jedem der Vielzahl von zu korrigierenden Ganzsatzerkennungsergebnissen umfasst;
ein viertes Bestimmungsmodul (609), das konfiguriert ist, um als Reaktion darauf, dass ein zu korrigierendes Ganzsatzerkennungsergebnis vorhanden ist, das mit dem Eigennahmen-korrigierten Erkennungsergebnis in der Ganzsatzkorrekturdatenbank übereinstimmt, das zu korrigierende Ganzsatzerkennungsergebnis, das mit dem Eigennamen-korrigierten Erkennungsergebnis übereinstimmt, als ein zu korrigierendes Ziel-Ganzsatzerkennungsergebnis zu bestimmen; und
ein fünftes Bestimmungsmodul (610), das konfiguriert ist, um ein korrigiertes Ganzsatzerkennungsergebnis entsprechend dem zu korrigierenden Ziel-Ganzsatzerkennungsergebnis als ein Ganzsatz-korrigiertes Erkennungsergebnis zu bestimmen.

5. Gerät nach Anspruch 4, wobei das erste Bestimmungsmodul Folgendes umfasst:
eine Auswahleinheit, die konfiguriert ist, um für jedes Zeichen eine Kandidatenzeichen-Pinyin-Zeichenfolge aus der mindestens einen Kandidatenzeichen-Pinyin-Zeichenfolge entsprechend dem Zeichen als eine Zielzeichen-Pinyin-Zeichenfolge auszuwählen;
eine Zusammenfügungseinheit, die konfiguriert ist, um Zielzeichen-Pinyin-Zeichenfolgen von ausgewählten Zeichen basierend auf einer Sequenz von Zeichen in dem Anfangserkennungsergebnis zusammenzufügen; und
eine erste Bestimmungseinheit, die konfiguriert ist, um eine zusammengefügte Pinyin-Zeichenfolge als die Satz-Pinyin-Zeichenfolge entsprechend dem Anfangserkennungsergebnis zu bestimmen.

6. Gerät nach Anspruch 4 oder 5, wobei eine Vielzahl von Satz-Pinyin-Zeichenfolgen vorhanden sind, und wobei das Erzeugungsmodul Folgendes umfasst:
eine Abgleichungseinheit, die konfiguriert ist, um jede der Vielzahl von Satz-Pinyin-Zeichenfolgen mit einer Vielzahl von zu korrigierenden Pinyin-Zeichenfolgen in einer Pinyin-Korrekturdatenbank abzugleichen, wobei die Pinyin-Korrekturdatenbank die Vielzahl von zu korrigierenden Pinyin-Zeichenfolgen, eine korrigierte Pinyin-Zeichenfolge entsprechend jeder zu korrigierenden Pinyin-Zeichenfolge, und ein Erkennungsergebnis entsprechend der korrigierten Pinyin-Zeichenfolge umfasst;
eine zweite Bestimmungseinheit, die konfiguriert ist, um als Reaktion darauf, dass eine zu korrigierende Pinyin-Zeichenfolge vorhanden ist, die mit der Satz-Pinyin-Zeichenfolge in der Pinyin-Korrekturdatenbank übereinstimmt, die korrigierte Pinyin-Zeichenfolge entsprechend der zu korrigierenden Pinyin-Zeichenfolge, die mit der Satz-Pinyin-Zeichenfolge übereinstimmt, als eine korrigierte Ziel-Pinyin-Zeichenfolge zu bestimmen; und
eine dritte Bestimmungseinheit, die konfiguriert ist, um ein Erkennungsergebnis entsprechend der korrigierten Ziel-Pinyin-Zeichenfolge als das Pinyin-korrigierte Erkennungsergebnis zu bestimmen.

7. Elektronische Vorrichtung, umfassend:
mindestens einen Prozessor; und
einen Speicher, der kommunikativ mit dem mindestens einen Prozessor gekoppelt ist; wobei der Speicher Anweisungen speichert, die von dem mindestens einen Prozessor ausgeführt werden können, wobei die Ausführungen von dem mindestens einen Prozessor ausgeführt werden, wobei der mindestens eine Prozessor in der Lage ist, das Verfahren nach einem der Ansprüche 1 - 3 zu implementieren.

8. Nicht-flüchtiges computerlesbares Speichermedium, das Computeranweisungen speichert, wobei die Computeranweisungen konfiguriert sind, um zu bewirken, dass der Computer das Verfahren nach einem der Ansprüche 1 - 3 implementiert.

9. Computerprogrammprodukt, das Computerprogramme umfasst, wobei, wenn die Computerprogramme von einem Prozessor ausgeführt werden, das Verfahren nach einem der Ansprüche 1 - 3 implementiert wird.

## Revendications

1. Procédé de reconnaissance de la parole, comprenant :
obtenir (101 ; 201 ; 301 ; 401) un résultat de reconnaissance initial par réalisation d'une reconnaissance de la parole sur une phrase à reconnaître ;
obtenir (102 ; 202 ; 302 ; 402) au moins une chaîne de caractères en pinyin candidate correspondant à chaque caractère dans le résultat de reconnaissance initial ;
déterminer (103 ; 203 ; 303 ; 403) au moins une chaîne de phrases en pinyin correspondant au résultat de reconnaissance initial sur la base de l'au moins une chaîne de caractères en pinyin candidate correspondant au caractère ; et
générer (104 ; 304 ; 404) un résultat de reconnaissance à correction de pinyin par réalisation d'une correction de pinyin sur le résultat de reconnaissance initial sur la base de l'au moins une chaîne de phrases en pinyin,
le procédé est **caractérisé en ce que**, après la génération du résultat de reconnaissance à correction de pinyin par réalisation de la correction de pinyin sur le résultat de reconnaissance initial, il comprend en outre :
mettre en correspondance (405) le résultat de reconnaissance à correction de pinyin avec une pluralité de résultats de reconnaissance à corriger dans une base de données de noms propres, dans lequel la base de données de noms propres comprend une pluralité de résultats de reconnaissance à corriger, et un résultat de reconnaissance corrigé correspondant à chacun de la pluralité de résultats de reconnaissance à corriger ;
déterminer (406), en réponse au fait qu'il existe un résultat de reconnaissance à corriger qui correspond au résultat de reconnaissance à correction de pinyin dans la base de données de noms propres, le résultat de reconnaissance à corriger qui correspond au résultat de reconnaissance à correction de pinyin en tant que résultat de reconnaissance cible à corriger ; et
déterminer (407) un résultat de reconnaissance corrigé correspondant au résultat de reconnaissance cible à corriger en tant que résultat de reconnaissance à correction de nom propre,
après la détermination du résultat de reconnaissance corrigé correspondant au résultat de reconnaissance cible à corriger en tant que résultat de reconnaissance à correction de nom propre, le procédé comprend en outre :
mettre en correspondance (408) le résultat de reconnaissance à correction de nom propre avec une pluralité de résultats de reconnaissance de phrase entière à corriger dans une base de données de correction de phrase entière, dans laquelle la base de données de correction de phrase entière comprend une pluralité de résultats de reconnaissance de phrase entière à corriger, et un résultat de reconnaissance de phrase entière corrigé correspondant à chacun de la pluralité des résultats de reconnaissance de phrase entière à corriger ;
déterminer (409), en réponse au fait qu'il existe un résultat de reconnaissance de phrase entière à corriger qui correspond au résultat de reconnaissance à correction de nom propre dans la base de données de correction de phrase entière, le résultat de reconnaissance de phrase entière à corriger qui correspond au résultat de reconnaissance à correction de nom propre en tant que résultat de reconnaissance de phrase entière cible à corriger ; et
déterminer (410) un résultat de reconnaissance de phrase entière corrigé correspondant au résultat de reconnaissance de phrase entière cible à corriger en tant que résultat de reconnaissance à correction de phrase entière.

2. Procédé selon la revendication 1, déterminer l'au moins une chaîne de phrases en pinyin correspondant au résultat de reconnaissance initial sur la base de l'au moins une chaîne de caractères en pinyin candidate correspondant à chaque caractère, comprenant :
pour chaque caractère, sélectionner une chaîne de caractères en pinyin candidate parmi l'au moins une chaîne de caractères en pinyin candidate correspondant au caractère en tant que chaîne de caractères en pinyin cible ;
épisser des chaînes de caractères en pinyin cibles de caractères sélectionnés sur la base d'une séquence de caractères dans le résultat de reconnaissance initial ; et
déterminer une chaîne en pinyin épissée en tant que chaîne de phrases en pinyin correspondant au résultat de reconnaissance initial.

3. Procédé selon la revendication 1 ou 2, dans lequel il existe une pluralité de chaînes de phrases en pinyin, et générer le résultat de reconnaissance à correction de pinyin par réalisation d'une correction de pinyin sur le résultat de reconnaissance initial sur la base de l'au moins une chaîne de phrases en pinyin, le procédé comprend en outre :
mettre en correspondance (204 ; 305) chacune de la pluralité de chaînes de phrases en pinyin avec une pluralité de chaînes en pinyin à corriger dans une base de données de correction de pinyin, dans laquelle la base de données de correction de pinyin comprend la pluralité de chaînes en pinyin à corriger, une chaîne en pinyin corrigée correspondant à chaque chaîne en pinyin à corriger, et un résultat de reconnaissance correspondant à la chaîne en pinyin corrigée ;
déterminer (205 ; 306), en réponse au fait qu'il existe une chaîne en pinyin à corriger qui correspond à la chaîne de phrases en pinyin dans la base de données de correction de pinyin, la chaîne en pinyin corrigée correspondant à la chaîne en pinyin à corriger qui correspond à la chaîne de phrases en pinyin en tant que chaîne en pinyin corrigée cible ; et
déterminer (206 ; 307) un résultat de reconnaissance correspondant à la chaîne en pinyin corrigée cible en tant que résultat de reconnaissance à correction de pinyin.

4. Appareil de reconnaissance de la parole (500 ; 600), comprenant :
un module de reconnaissance (501 ; 601), configuré pour obtenir un résultat de reconnaissance initial par réalisation d'une reconnaissance de la parole sur une phrase à reconnaître ;
un module d'obtention (502 ; 602), configuré pour obtenir au moins une chaîne de caractères en pinyin candidate correspondant à chaque caractère dans le résultat de reconnaissance initial ;
un premier module de détermination (503 ; 603), configuré pour déterminer au moins une chaîne de phrases en pinyin correspondant au résultat de reconnaissance initial sur la base de l'au moins une chaîne de caractères en pinyin candidate correspondant au caractère ; et
un module de génération (504 ; 604), configuré pour générer un résultat de reconnaissance à correction de pinyin par réalisation d'une correction de pinyin sur le résultat de reconnaissance initial sur la base de l'au moins une chaîne de phrases en pinyin,
l'appareil est **caractérisé en ce qu'**il comprend en outre :
un premier module de mise en correspondance (605), configuré pour mettre en correspondance le résultat de reconnaissance à correction de pinyin avec une pluralité de résultats de reconnaissance à corriger dans une base de données de noms propres, dans lequel la base de données de noms propres comprend une pluralité de résultats de reconnaissance à corriger, et un résultat de reconnaissance corrigé correspondant à chacun de la pluralité de résultats de reconnaissance à corriger ;
un deuxième module de détermination (606), configuré pour déterminer, en réponse au fait qu'il existe un résultat de reconnaissance à corriger qui correspond au résultat de reconnaissance à correction de pinyin dans la base de données de noms propres, le résultat de reconnaissance à corriger qui correspond au résultat de reconnaissance à correction de pinyin en tant que résultat de reconnaissance cible à corriger ; et
un troisième module de détermination (607), configuré pour déterminer un résultat de reconnaissance corrigé correspondant au résultat de reconnaissance cible à corriger en tant que résultat de reconnaissance à correction de nom propre,
l'appareil comprend en outre :
un deuxième module de mise en correspondance (608), configuré pour mettre en correspondance le résultat de reconnaissance à correction de nom propre avec une pluralité de résultats de reconnaissance de phrase entière à corriger dans une base de données de correction de phrase entière, dans lequel la base de données de correction de phrase entière comprend une pluralité de résultats de reconnaissance de phrase entière à corriger, et un résultat de reconnaissance à correction de phrase entière correspondant à chacun de la pluralité des résultats de reconnaissance de phrase entière à corriger ;
un quatrième module de détermination (609), configuré pour déterminer, en réponse au fait qu'il existe un résultat de reconnaissance de phrase entière à corriger qui correspond au résultat de reconnaissance à correction de phrase entière dans la base de données de correction de phrase entière, le résultat de reconnaissance de phrase entière à corriger qui correspond au résultat de reconnaissance à correction de nom propre en tant que résultat de reconnaissance de phrase entière cible à corriger ; et
un cinquième module de détermination (610), configuré pour déterminer un résultat de reconnaissance de phrase entière corrigé correspondant au résultat de reconnaissance de phrase entière cible à corriger en tant que résultat de reconnaissance à correction de phrase entière.

5. Appareil selon la revendication 4, dans lequel le premier module de détermination comprend :
une unité de sélection, configurée pour sélectionner, pour chaque caractère, une chaîne de caractères en pinyin candidate parmi l'au moins une chaîne de caractères en pinyin candidate correspondant au caractère en tant que chaîne de caractères en pinyin cible ;
une unité d'épissage, configurée pour épisser des chaînes de caractères en pinyin cibles de caractères sélectionnés sur la base d'une séquence de caractères dans le résultat de reconnaissance initial ; et
une première unité de détermination, configurée pour déterminer une chaîne en pinyin épissée en tant que chaîne de phrases en pinyin correspondant au résultat de reconnaissance initial.

6. Appareil selon la revendication 4 ou 5, dans lequel il existe une pluralité de chaînes de phrases en pinyin, et le module de génération comprend :
une unité de mise en correspondance, configurée pour mettre en correspondance chacune de la pluralité de chaînes de phrases en pinyin avec une pluralité de chaînes en pinyin à corriger dans une base de données de correction de pinyin, dans laquelle la base de données de correction de pinyin comprend la pluralité de chaînes en pinyin à corriger, une chaîne en pinyin corrigée correspondant à chaque chaîne en pinyin à corriger, et un résultat de reconnaissance correspondant à la chaîne en pinyin corrigée ;
une deuxième unité de détermination, configurée pour déterminer, en réponse au fait qu'il existe une chaîne en pinyin à corriger qui correspond à la chaîne de phrases en pinyin dans la base de données de correction de pinyin, la chaîne en pinyin corrigée correspondant à la chaîne en pinyin à corriger qui correspond à la chaîne de phrases en pinyin en tant que chaîne en pinyin corrigée cible ; et
une troisième unité de détermination, configurée pour déterminer un résultat de reconnaissance correspondant à la chaîne en pinyin corrigée cible en tant que résultat de reconnaissance à correction de pinyin.

7. Dispositif électronique, comprenant :
au moins un processeur ; et
une mémoire couplée en communication à l'au moins un processeur ; dans lequel,
la mémoire stocke des instructions exécutables par l'au moins un processeur, lorsque les instructions sont exécutées par l'au moins un processeur, l'au moins un processeur est autorisé à mettre en oeuvre le procédé selon l'une des revendications 1 à 3.

8. Support de stockage non transitoire lisible par ordinateur stockant des instructions informatiques, dans lequel les instructions informatiques sont configurées pour faire mettre en oeuvre à l'ordinateur le procédé selon l'une des revendications 1 à 3.

9. Produit de programme informatique comprenant des programmes informatiques, dans lequel, lorsque les programmes informatiques sont exécutés par un processeur, le procédé selon l'une des revendications 1 à 3 est mis en oeuvre.
